# EUROPÄISCHE PATENTANMELDUNG

(11) **EP 0 555 685 A1**
(43) Veröffentlichungstag der Anmeldung: **18.08.1993**
(21) Anmeldenummer: 93101137.3
(22) Anmeldetag: 26.01.1993
(51) Int. Cl.: F16M 11/10, A47B 19/00

(54) **Stativ zum Halten von Gegenständen**

(30) Priorität: 11.02.1992 DE 4203900
(71) Anmelder: Rudolf Wittner GmbH u. Co., D-88316 Isny (DE)
(72) Erfinder: Vochezer, Georg, W-7989 Argenbühl-Christazhofen Nr. 123 (DE)
(74) Vertreter: Hoeger, Stellrecht & Partner

(57) **Zusammenfassung**

Ein Stativ zum Halten von Gegenständen umfaßt einen drei schwenkbare Füße aufweisenden Sockel, eine im Sockel auswechselbar und im wesentlichen vertikal gehaltene Stativstange und eine am oberen Ende der Stativstange angeordnete, schwenkbare Vorrichtung (12) zum Halten der Gegenstände. Die letztere Vorrichtung umfaßt einen schwenkbaren Gegenstandsträger (17) und ein fest mit dem oberen Ende der Stativstange verbundenes Gelenkteil (15) mit einem quer zur Längsachse der Stativstange verlaufenden Gelenkbolzen (16). Der Gegenstandsträger (17) weist zwei in gegenseitigem Abstand angeordnete Lagerstege (19) mit Lagermulden auf (21), in die der Gelenkbolzen (16) seitlich einführbar ist. Die Lagerstege (19) haben ferner je eine koaxial zu den Lagermulden kreisförmig gekrümmte Spannfläche (22). Am Gelenkteil (15) ist parallel zur Längsachse der Stativstange verschieblich ein Druckring (26) gelagert, an dem mit den Spannflächen (22) der Lagerstege zusammenwirkende Druckflächen ausgebildet sind. Schließlich ist am Gelenkteil ein Spannglied (25) drehbar gelagert, das bei seiner Verdrehung eine Vertikalverschiebung des Druckrings (26) bewirkt und diesen hierdurch in lösbaren Eingriff mit den Lagerstegen (19) bringt.

## Beschreibung

Die Erfindung betrifft ein Stativ zum Halten von Gegenständen nach dem Oberbegriff des Patentanspruchs 1.

Ein Stativ mit einer vertikal ausgerichteten Stativstange zum Halten eines Tisches ist aus GB-PS 14036 bekannt. Der Tisch wird dabei durch einen gefederten Hebelmechanismus, der mit einem Zahnkranz verrastbar ist, in verschiedenen Winkelstellungen eingestellt.

Bei einem anderen der Patentinhaberin bekannten Stativ ist zum Arretieren der schwenkbaren Haltevorrichtung am oberen Ende der Stativstange eine seitlich vorstehende Feststellschraube mit verhältnismäßig kleinem Schraubenkopf vorgesehen. Mit diesem Schraubenkopf kann man nur ein geringes Drehmoment zum Arretieren der Haltevorrichtung ausüben, so daß diese häufig nicht mit der erforderlichen Kraft feststellbar ist und in unbeabsichtigter Weise aus dieser Position herausgelangt. Dies ist beispielsweise bei einem Notenständer unerwünscht, weil hierdurch während des Musizierens die festgehaltenen Notenblätter plötzlich zu Boden fallen können. Außerdem ist eine solche feste Schraube, insbesondere dann, wenn sie von der relativ großen Platte eines Notenständers überdeckt ist, nur schwer zugänglich.

Es ist Aufgabe der Erfindung, ein gattungsgemäßes Stativ so auszubilden, daß die schwenkbare Vorrichtung zum Halten der Gegenstände in einfacher Weise am oberen Ende des Stativs leicht und bequem mit der erforderlichen Kraft festgestellt und wieder gelöst werden kann.

Die Aufgabe wird erfindungsgemäß durch die im Kennzeichnungsteil des Patentanspruchs 1 stehenden Merkmale gelöst.

Die nachstehende Beschreibung einer bevorzugten Ausführungsform der Erfindung dient im Zusammenhang mit beiliegender Zeichnung der weiteren Erläuterung. Es zeigen:
- Figur 1: eine schaubildliche Gesamtansicht eines Stativs;
- Figur 2: eine Schnittansicht des oberen Teils des Stativs aus Fig. 1;
- Figur 3: ein Gelenkteil des Stativs;
- Figur 4: einen Druckring;
- Figur 5: eine Schnittansicht eines Gegenstandsträgers entlang der Linie 5-5 in Fig. 6 und
- Figur 6: eine Schnittansicht entlang der Linie 6-6 in Fig. 5.

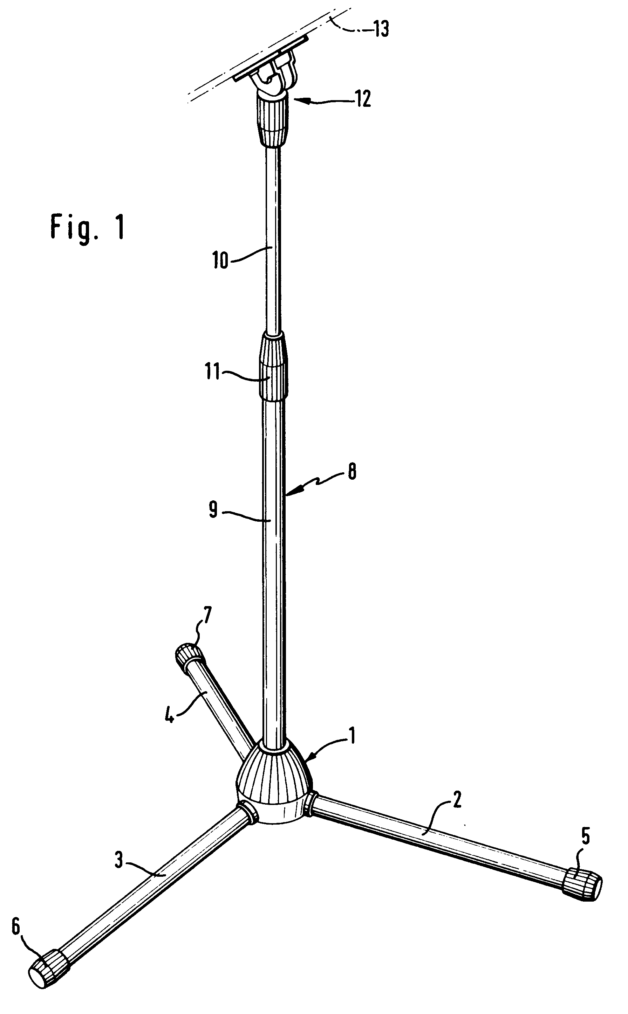

Das in Fig. 1 dargestellte Stativ zum Halten von Gegenständen besteht aus einem unten liegenden Stativsockel 1 mit drei nach unten schwenkbar an ihm befestigten Standfüßen 2, 3, 4, an deren Enden Gleitschutzkappen 5, 6, 7, z.B. aus elastomerem Material angeordnet sind. Vom Stativsockel 1 geht nach oben eine Stativstange 8 ab, die aus zwei teleskopierend ineinander verschieblichen Teilen 9, 10 besteht. Mittels einer drehbaren Muffe 11 können die beiden Teile 9, 10 relativ zueinander in einer bestimmten Auszugslänge festgestellt werden.

Am oberen Ende des Teils 10 der Stativstange 8 ist eine schwenkbare Vorrichtung 12 zum Halten von Gegenständen vorgesehen, die in beliebigen Winkellagen eingestellt werden kann. Bei der dargestellten Ausführungsform umfaßt die Vorrichtung zum Halten von Gegenständen eine fest mit ihr verbundene relativ große Platte 13 herkömmlicher Art, auf welche Notenblätter aufgelegt werden können. Das Stativ 1 bildet somit insgesamt einen Notenständer.

Die schwenkbare Vorrichtung 12 kann jedoch auch in anderer Weise ausgebildet sein, so daß sie sich für die Halterung anderer Gegenstände, beispielsweise eines Mikrophons, eines Mukinstrumentes oder dgl. eignet.

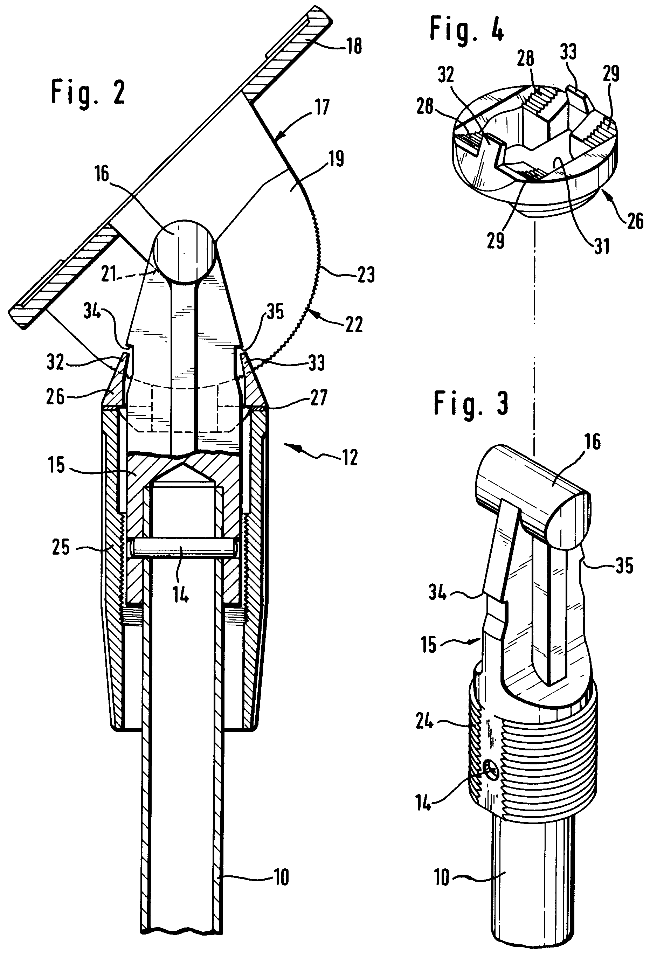

Im folgenden wird die Ausbildung der schwenkbaren Haltevorrichtung 12 anhand von Fig. 2 bis 6 im einzelnen erläutert.

Die schwenkbare Vorrichtung 12 zum Halten von Gegenständen umfaßt, vgl. insbesondere Fig. 2 und 3, einen, z.B. durch einen Stift 14 fest mit dem oberen Teil 10 der Stativstange 8 verbundenes Gelenkteil 15 mit einem quer zur Längsachse der Stativstange 8 verlaufenden Gelenkbolzen 16, der bei der dargestellten Ausführungsform mit dem Gelenkteil 15 einstückig ausgebildet ist und abgerundete Stirnflächen aufweist.

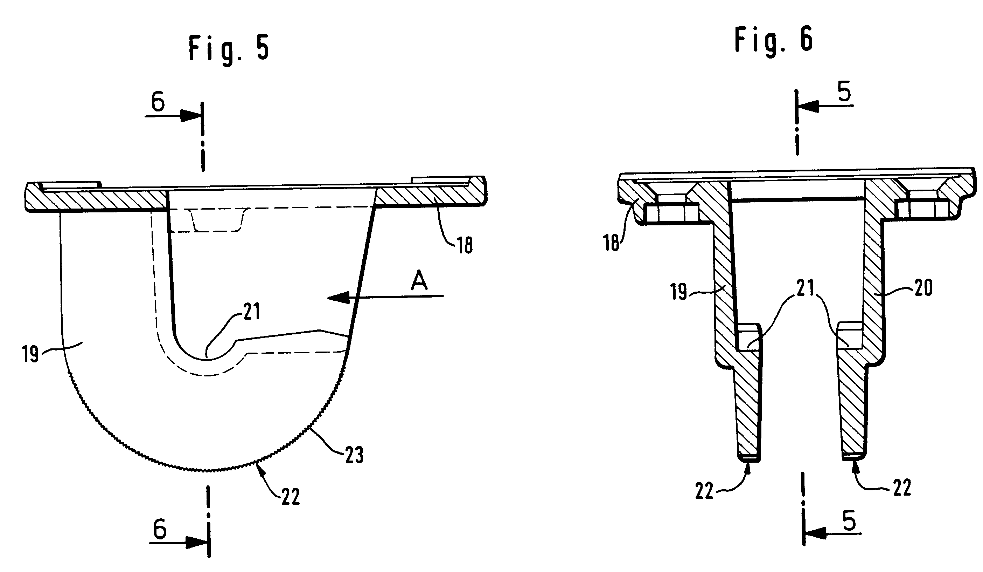

Auf dem Gelenkbolzen 16, vergleiche insbesondere Fig. 2, ist ein Gegenstandsträger 17 schwenkbar gelagert. Der Gegenstandsträger 17 weist zwei von einer Platte 18 in gegenseitigem Abstand senkrecht abstehende Lagerstege 19, 20 - siehe auch Fig. 5 und 6 - auf. Mit der Platte 18 wird, z.B. durch Verschrauben, die in Fig. 1 dargestellte Platte 13 zur Halterung von Notenblättern fest verbunden. Wie am besten aus Fig. 5 und 6 ersichtlich, ist an den einander zugewandten Innenseiten der Lagerstege 19, 20 eine Lagermulde 21 ausgebildet, die drehbar den Gelenkbolzen 16 des Gelenkteils 15 aufnimmt. Wie am besten aus Fig. 5 ersichtlich, kann dieser Gelenkbolzen 16 seitlich in Richtung des Pfeiles A zwischen die Lagerstege 19, 20 eingeführt und in die Lagermulde 21 verbracht werden.

Die beiden Lagerstege 19, 20 weisen je eine koaxial zur Achse der Lagermulde 21 und damit zur Achse des Gelenkbolzens 16 kreisförmig gekrümmte Spannfläche 22 auf, die mit einer relativ feinen Zahnung 23 versehen ist.

Der Gelenkteil 15 (Fig. 3) weist ein Außengewinde 24 auf, auf das ein Spannglied in Gestalt einer langgestreckten Spannmutter 25 (Fig. 2) aufschraubbar ist. Über das sich nach oben keilförmig verjüngende Ende des Gelenkteils 15 ist ein Druckring 26 (Fig. 4) aufgeschoben, der vom mittleren Abschnitt des Gelenkteils 15 vertikal verschieblich aufgenommen wird. Der Druckring 26 ist (Fig. 2) unter Zwischenschaltung eines Gleitringes 27 auf dem oberen Rand der Spannmutter 25 abgestützt. Wenn dementsprechend die Spannmutter 25 mit ihrem Innengewinde auf dem Außengewinde 24 des Gelenkteils 15 verdreht wird, und hierdurch relativ zum Teil 10 der Stativstange 8 nach unten oder oben wandert, wird der Druckring 26 in der gleichen Richtung mitgenommen.

Der Druckring 26 weist an seiner den Lagerstegen 19, 20 zugekehrten Oberseite 2 gekrümmte Druckflächen 28, 29 mit Zahnungen auf, die durch einen für den Durchtritt des Gelenkbolzen 16 bestimmten Spalt 31 voneinander getrennt sind.

Wenn die Spannmutter 25 zusammen mit dem Druckring 26 nach oben gedreht wird, greifen die gezahnten Druckflächen 28, 29 des Druckrings 26 in die Zahnungen 23 der Lagerstege 19, 20 ein und drücken die Lagermulde 21 fest gegen die Unterseite des Gelenkbolzens 16. Hierdurch kann der Gegenstandsträger 17 in einer gewünschten Winkellage am Stativ festgespannt werden.

Wie aus Fig. 4 ersichtlich, stehen vom Druckring 26 zwischen dessen Zahnungen 28, 29 zwei Rastnasen 32, 33 schräg nach oben ab, die leicht elastisch ausgebildet sind und unter entsprechenden Hinterschneidungen 34, 35 des Gelenkteils 15 einrasten. Hierdurch ist der Druckring 26 unverlierbar an diesem Gelenkteil 15 gehalten, ohne daß seine Vertikalverschieblichkeit auf dem Gelenkteil beeinträchtigt ist.

Wenn die Spannmutter 25 in entgegengesetzter Richtung verdreht wird, löst sich der Eingriff der Druckflächen 28, 29 mit den Spannflächen 22 der Lagerstege 19, 20. Somit kann die Winkellage des Gegenstandsträgers 17 verändert werden.

Bei der dargestellten und beschriebenen Ausführungsform erfolgt die Vertikalbewegung des als Spannmutter 25 ausgebildeten Spannglieds durch Verdrehung auf dem Außengewinde 24 des Gelenkteils 15. Bei einer anderen Ausführungsform kann dieses Spannglied auch mit einem Lagermittel frei drehbar auf dem oberen Teil 10 der Stativstange 8 angeordnet werden, ohne daß dabei eine Verdrehung eine Vertikalverschiebung dieses Spanngliedes herbeiführt. In diesem Falle ist an dem oberen Rand des Spanngliedes 25 eine kreisförmig verlaufende, schiefe Ebene ausgebildet, die mit einer an der Unterseite des Druckrings 26 vorgesehenen Nocke oder mit einer entsprechenden schiefen Ebene zusammenwirkt und beim Verdrehen des Spanngliedes ein Anheben des Druckringes 26 veranlaßt.

Bei jeder der beiden beschriebenen Ausführungsformen ist das Spannglied als eine Art Muffe ausgebildet, die um die Längsachse der Stativstange 8 drehbar ist. Da das Spannglied mit einer Hand fest umschlossen werden kann und einen relativ großen Durchmesser hat, kann die Festspannung des Gegenstandsträgers 17 mit einem verhältnismäßig großen Drehmoment bewirkt werden, so daß am Gegenstandsträger 17 eine Spannkraft entsteht, die ein unbeabsichtigtes Verschwenken des Gegenstandsträgers 17 aus seiner eingestellten Postition unmöglich macht.

## Patentansprüche

1. Stativ zum Halten von Gegenständen mit einem drei schwenkbare Füße aufweisenden Sockel, mit einer im Sockel auswechselbar und im wesentlichen vertikal gehaltenen Stativstange und mit einer am oberen Ende der Stativstange angeordneten, schwenkbaren Vorrichtung zum Halten der Gegenstände, wobei die schwenkbare Vorrichtung zum Halten der Gegenstände einen schwenkbaren Gegenstandsträger und ein fest mit dem oberen Ende der Stativstange verbundenes Gelenkteil mit einem quer zur Längsachse der Stativstange verlaufenden Gelenkbolzen umfaßt und der Gegenstandsträger zwei in gegenseitigem Abstand angeordnete Lagerstege aufweist, in die der Gelenkbolzen seitlich einführbar ist,
**dadurch gekennzeichnet**,
daß an den Lagerstegen (19, 20) Lagermulden (21) vorgesehen sind, in die der Gelenkbolzen (16) seitlich einführbar ist,
daß die Lagerstege (19, 20) je eine koaxial zu den Lagermulden (21) kreisförmig gekrümmte Spannfläche (22) aufweisen,
daß am Gelenkteil (15) parallel zur Längsachse der Stativstange (8) verschieblich ein Druckring (26) gelagert ist, an dem mit den Spannflächen (22) der Lagerstege (19, 20) zusammenwirkende Druckflächen (28, 29) ausgebildet sind, und
daß am Gelenkteil (15) ein Spannglied (25) drehbar gelagert ist, das bei seiner Verdrehung eine Vertikalverschiebung des Druckrings (26) bewirkt und diesen hierdurch in lösbaren Eingriff mit den Lagerstegen (19, 20) bringt, wodurch der Gegenstandsträger (17) in beliebiger Winkelstellung relativ zur Stativstange (8) arretierbar ist.

2. Stativ nach Anspruch 1, dadurch gekennzeichnet, daß der Gegenstandsträger (17) ein Pultträger zur Aufnahme einer Pultplatte (13) ist.

3. Stativ nach Anspruch 1, dadurch gekennzeichnet, daß die Spannflächen (22) der Lagerstege (19, 20) und die Druckflächen (28, 29) des Druckringes (26) ineinander eingreifende Zahnungen (23) aufweisen.

4. Stativ nach Anspruch 1, dadurch gekennzeichnet, daß zwischen Druckring (26) und Spannglied (25) ein Gleitring (27) eingelegt ist.

5. Stativ nach Anspruch 1, dadurch gekennzeichnet, daß das Spannglied eine Spannmutter (25) ist, die mittels eines Innengewindes auf einem Außengewinde (24) des Gelenkteils (15) verdrehbar ist.

6. Stativ nach Anspruch 1, dadurch gekennzeichnet, daß der Druckring (26) durch Rastnasen (32, 33) am Gelenkteil (15) verrastbar ist.
